# EUROPEAN PATENT SPECIFICATION

(11) **EP 2 766 790 B1**
(45) Date of publication and mention of the grant of the patent: **04.07.2018**
(21) Application number: 12795109.3
(22) Date of filing: 11.10.2012
(51) Int. Cl.: G06F 3/01, G06F 3/03

(54) **AUTHENTICATED GESTURE RECOGNITION**
AUTHENTIFIZIERTE GESTENERKENNUNG
RECONNAISSANCE DES GESTES AUTHENTIFIÉS

(30) Priority: 12.10.2011 US 201161546531 P; 19.06.2012 US 201213526888
(43) Date of publication of application: 20.08.2014
(73) Proprietor: Qualcomm Incorporated, San Diego, CA 92121-1714 (US)
(72) Inventor: KRISHNAMURTHI, Govindarajan, San Diego, California 92121 (US)
(74) Representative: Tomkins & Co
(86) International application number: PCT/US2012/059804
(87) International publication number: WO 2013/055953

(56) References cited:
- EP-A1- 1 847 954
- US-A1- 2011 197 263

## Description

### BACKGROUND

Aspects of the disclosure relate to computing technologies. In particular, aspects of the disclosure relate to mobile computing device technologies, such as systems, methods, apparatuses, and computer-readable media that perform gesture recognition.

Increasingly, computing devices, such as smart phones, tablet computers, personal digital assistants (PDAs), and other mobile devices, include touch screens, accelerometers, cameras, proximity sensors, microphones, and/or other sensors that may allow these devices to capture motion and/or other sensed conditions as a form of user input. In some devices, for instance, particular movements and/or occurrences may be recognized, for instance, as gestures that correspond to particular commands. For example, a device may recognize one gesture, such as a left swipe (e.g., in which a user slides a finger across the device to the left), as corresponding to a "previous page" command, while the device may recognize another gesture, such as a shake (e.g., in which the user shakes the device), as corresponding to an "undo" command. In this example, a user thus may cause the device to execute these commands by performing the corresponding gestures. US2011/0197263 A1 is directed to a spatial- input based multi-user shared display session. Aspects of the disclosure provide more convenient, intuitive, and functional ways of performing gesture recognition.

### SUMMARY

Systems, methods, apparatuses, and computer-readable media for performing authenticated gesture recognition are presented. While some current computing systems may implement gesture recognition (e.g., by detecting one or more gestures performed by a user and executing one or more actions in response to such detection), these current systems might not allow a user to customize which action or actions are executed in
response to a particular gesture based on which user performs the gesture. Moreover, these current systems might not allow for a user to be identified in real-time (e.g., as a gesture is performed by the user and/or detected by a computing device), or for multiple users to perform gestures on and/or interact with a single device simultaneously.

As discussed below, however, authenticated gesture recognition may be implemented in a computing device, such as a hand-held device, tablet, smart phone, or other mobile device, that is shared by different users who may wish to individually customize actions performed in response to various input gestures, which may include touch-based and/or other types of device-detected user input (e.g., user input detected using one or more cameras, microphones, proximity sensors, gyroscopes, accelerometers, pressure sensors, grip sensors, touch screens, etc.). Such gesture recognition may be considered "authenticated" because the device may determine the user's identity and/or otherwise authenticate the user prior to determining which command should be executed in response to the detected gesture. In addition, determining which command should be executed may be based on the determined identity of the user, as particular gestures may be "overloaded" or customized to correspond to different commands for different users. Furthermore, the identity of the user performing a particular gesture may be determined in real-time (e.g., using sensor input that is captured substantially contemporaneously by the device as the gesture is performed and/or detected), such that a user might not need to "log in" to a device prior to interacting with it, and/or such that multiple users may be able to interact with a single device at the same time.

According to one or more aspects of the disclosure, a gesture performed by a user may be detected. Subsequently, an identity of the user may be determined based on sensor input captured substantially contemporaneously with the detected gesture. Thereafter, it may be determined, based on the identity of the user, that the detected gesture corresponds to at least one command of a plurality of commands. The at least one command then may be executed.

Additionally, as noted above, different users may set preferences specifying that the same gesture should correspond to different actions. Thus, in one additional embodiment, the detected gesture (e.g., a left swipe) may correspond to a first command (e.g., a next page command) when performed by a first user, and the same detected gesture (e.g., a left swipe) may correspond to a second command (e.g., a previous page command) different from the first command when performed by a second user different from the first user. Such embodiments may be beneficial when a single device is being used by a plurality of people, such as by different members of a family or by different employees in a workplace. For example, a tablet or other mobile device may be used by different practitioners in a hospital or other healthcare facility.

Other embodiments may allow users to perform an authenticated training of the device in which the device may be programmed to perform different actions in response to detecting different gestures. For example, in these embodiments, prior to the gesture being detected, the identity of the user may be authenticated (e.g., via a user login prompt, using input from one or more sensors such as a camera, etc.). Once the identity of the user has been authenticated, first user input corresponding to the gesture may be received and second user input corresponding to the particular command may be received. Subsequently, the gesture and the identity of the user may be associated with the particular command (e.g., by updating information in a gesture map or other data table or database in which gesture information is stored). In some embodiments, a gesture may be used to authenticate the user. After authentication, a second detected gesture may be sensed as a command from the user. In another embodiment, a gesture may be both uniquely associated with a user and associated with a command. Thus, the gesture may be used not only to authenticate the user, but simultaneously to provide a command.

In still other embodiments, the mechanics of the gesture recognition may vary based on the identity of the user. For example, different sensors and/or combinations of sensors may be used in detecting gesture input from different users. Stated differently, in at least one embodiment, prior to the gesture being detected, it may be determined, based on the identity of the user, that one or more particular sensors of a plurality of sensors are to be used in detecting one or more gestures. In at least one variation of this embodiment, the one or more particular sensors may be specified by the user (e.g., a first user may specify that only camera sensors are to be used in detecting gesture input from the first user, while a second user may specify that both camera sensors and accelerometers are to be used in detecting gesture input from the second user). In some embodiments, a gesture detection engine running on the computing device may be configured differently for a plurality of users. For example, when detecting a panning motion, a threshold for a velocity of the pan and/or a threshold of a distance of the pan may be defined differently for each user. Thus, not only may a mapping of gestures to functions or commands be unique for each of a plurality of users, but how the gestures are detected for each user may vary. Further, the set of gestures associated with one user may differ from the set of gestures associated with a second user.

In yet other embodiments, the action performed in response to a particular gesture might depend not only on the identity of the user performing the gesture, but also on the application currently being executed and/or currently being accessed on the device (e.g., the software application that is to receive the gesture as input and/or perform some action in response to the gesture). For example, a "right shake" gesture may correspond to a first command (e.g., an erase command) in a first application (e.g., a word processing application), and the same "right shake" gesture may correspond to a second command (e.g., an accelerate command) in a second application (e.g., a car racing video game).

In still other embodiments, the action performed in response to a particular gesture may include both opening a particular application and then executing a particular command within the newly opened application. Such a gesture may, for instance, be detected while a "home" or menu screen of an operating system is displayed, and in additional or alternative arrangements, such a gesture may be detected while another application (e.g., different from the application to be opened) is currently being executed and/or actively displayed. For example, while a home screen is displayed by a computing device, a user may perform (and the device may detect) a particular gesture, such as the user drawing an outline of an envelope on the device's touchscreen, and in response to detecting the gesture, the device may both open and/or display an email application and further open and/or display a user interface within the email application via which the user may compose a new email message. As another example, while the email application is displayed by the computing device, the user may perform (and the device may detect) another gesture, such as the user drawing an outline of a particular number on the device's touchscreen, and in response to detecting the gesture, the device may open and/or switch to displaying a calculator application. As illustrated in these examples, some gestures may be recognized across different applications and/or may be mapped to application-independent commands. Additionally or alternatively, some gestures may be mapped to multiple actions, such that two or more commands are executed in response to detecting such a gesture.

In still other embodiments, user-specific gesture preferences set on one device (e.g., a smart phone) may be transferred to another, separate device (e.g., a tablet computer). In these embodiments, determining that a detected gesture corresponds to a particular command might be based not only on the identity of the user, but also on gesture mapping data received from another device, such as the device upon which the user originally set preferences related to gestures and/or otherwise created the gesture mapping data. Gesture mapping data may therefore be transmitted from one user device to another user device, either directly or through a communications network and/or intermediate server. In one embodiment, gesture mapping data is stored on a server and accessed when a user device is determining a meaning of a gesture, or a library of gesture mapping data for a user is downloaded from the server when a user is authenticated. In some aspects, gesture mapping data is stored locally on a user device. In such configurations, the gesture data may not only vary by user and/or application, but may also vary across devices.

In one embodiment, a device may detect gestures substantially concurrently from a plurality of users. For example, two users may be using a single device to play a video game, where one user controls the game by touching a first half of a display of the device and another user controls the game by touching a second half of the display. Different gestures may be detected for each of the users and/or the same detected gestures may be associated with different commands for each user. In one embodiment, gestures from each of a plurality of users may be detected by a camera or plurality of cameras, and the gesture(s) of each user may be used to determine a command based on the identity of the respective user.

### BRIEF DESCRIPTION OF THE DRAWINGS

Aspects of the disclosure are illustrated by way of example. In the accompanying figures, like reference numbers indicate similar elements, and:
FIG. 1 illustrates an example device that may implement one or more aspects of the disclosure.
FIG. 2 illustrates an example method of performing authenticated gesture recognition according to one or more illustrative aspects of the disclosure.
FIG. 3A illustrates an example of how a user may perform a gesture and how a device may detect a gesture according to one or more illustrative aspects of the disclosure.
FIG. 3B illustrates another example of how a user may perform a gesture and how a device may detect a gesture according to one or more illustrative aspects of the disclosure.
FIG. 4 illustrates an example of how multiple users may perform gestures and how a device may detect the gestures and identify the users according to one or more illustrative aspects of the disclosure.
FIGS. 5A and 5B illustrate another example of how multiple users may perform gestures and how a device may detect the gestures and identify the users according to one or more illustrative aspects of the disclosure.
FIG. 6 illustrates an example computing system in which one or more aspects of the disclosure may be implemented.

### DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the appended claims.

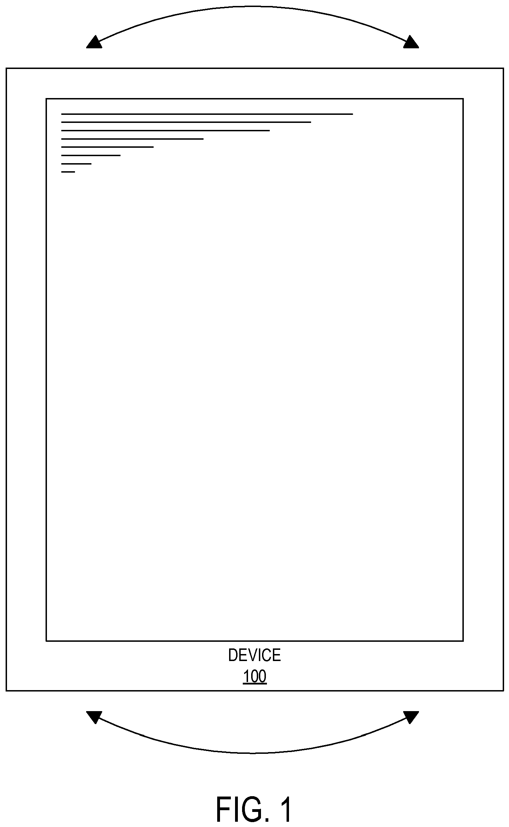

FIG. 1 illustrates an example device that may implement one or more aspects of the disclosure. For example, computing device 100 may be a smart phone, tablet computer, personal digital assistant, or other mobile device that is equipped with one or more sensors that allow computing device 100 to capture motion and/or other sensed conditions as a form of user input. For instance, computing device 100 may be equipped with, be communicatively coupled to, and/or otherwise include one or more cameras, microphones, proximity sensors, gyroscopes, accelerometers, pressure sensors, grip sensors, touch screens, current or capacitive sensors, and/or other sensors. In addition to including one or more sensors, computing device 100 also may include one or more processors, memory units, and/or other hardware components, as described in greater detail below.

In one or more arrangements, computing device 100 may use any and/or all of these sensors alone or in combination to recognize gestures performed by one or more users of the device. For example, computing device 100 may use one or more cameras to capture hand and/or arm movements performed by a user, such as a hand wave or swipe motion, among other possible movements. In addition, more complex and/or large-scale movements, such as whole body movements performed by a user (e.g., walking, dancing, etc.), may likewise be captured by the one or more cameras (and/or other sensors) and subsequently be recognized as gestures by computing device 100, for instance. In yet another example, computing device 100 may use one or more touch screens to capture touch-based user input provided by a user, such as pinches, swipes, and twirls, among other possible movements. While these sample movements, which may alone be considered gestures and/or may be combined with other movements or actions to form more complex gestures, are described here as examples, any other sort of motion, movement, action, or other sensor-captured user input may likewise be received as gesture input and/or be recognized as a gesture by a computing device implementing one or more aspects of the disclosure, such as computing device 100.

In some arrangements, for instance, a camera such as a depth camera may be used to control a computer or hub based on the recognition of gestures or changes in gestures of a user. Unlike some touch-screen systems that might suffer from the deleterious, obscuring effect of fingerprints, camera-based gesture input may allow photos, videos, or other images to be clearly displayed or otherwise output based on the user's natural body movements or poses. With this advantage in mind, gestures may be recognized that allow a user to view, pan (i.e., move), size, rotate, and perform other manipulations on image objects.

A depth camera, which may be implemented as a time-of-flight camera in some embodiments, may include infrared emitters and a sensor. The depth camera may produce a pulse of infrared light and subsequently measure the time it takes for the light to travel to an object and back to the sensor. A distance may be calculated based on the travel time. Other depth cameras, for example stereo cameras, may additionally or instead be used. In some embodiments, a camera that captures only two dimensional images is used, or sensors other than a camera are used. In some embodiments, a light field camera is used.

As used herein, a "gesture" is intended to refer to a form of non-verbal communication made with part of a human body, and is contrasted with verbal communication such as speech. For instance, a gesture may be defined by a movement, change or transformation between a first position, pose, or expression and a second pose, position, or expression. Common gestures used in everyday discourse include for instance, an "air quote" gesture, a bowing gesture, a curtsey, a cheek-kiss, a finger or hand motion, a genuflection, a head bobble or movement, a high-five, a nod, a sad face, a raised fist, a salute, a thumbs-up motion, a pinching gesture, a hand or body twisting gesture, or a finger pointing gesture. A gesture may be detected using a camera, such as by analyzing an image of a user, using a tilt sensor, such as by detecting an angle that a user is holding or tilting a device, or by any other approach.

A body part may make a gesture (or "gesticulate") by changing its position (i.e. a waving motion), or the body part may gesticulate without changing its position (i.e. by making a clenched fist gesture). In some arrangements, hand and arm gestures may be used to effect the control of functionality via camera input, while in other arrangements, other types of gestures may also be used. Additionally or alternatively, hands and/or other body parts (e.g., arms, head, torso, legs, feet, etc.) may be moved in making and/or detecting one or more gestures. For example, some gestures may be performed by moving one or more hands, while other gestures may be performed by moving one or more hands in combination with one or more arms, one or more legs, and so on.

In one or more example usage situations, a device like computing device 100 may be used by and/or shared between multiple users. For example, computing device 100 may be a tablet computer that is shared among family members, such as a father, mother, son, and daughter. Each user may use the device for different purposes, and each user may desire for the device to respond differently to particular input gestures to suit their individual tastes, habits, and/or preferences. For instance, one user, such as the mother in the family, may use the tablet computer to read electronic books, and she may prefer that a certain gesture (e.g., a left swipe gesture) correspond to a particular command (e.g., a next page command, which may advance to the next page in content being displayed, such as an electronic book being displayed). However, another user in this example, such as the son, may use the tablet computer to browse Internet sites, and he may prefer that the same gesture (i.e., the left swipe gesture) correspond to a different command than his mother (e.g., a back page command, which may return to the previous page in content being displayed, such as an Internet site being displayed).

In conventional gesture-recognition systems, the mother and son in this example may experience a great deal of frustration, as when the device is configured to suit the preferences of one of them, the device might not function in accordance with the preferences of the other, without being reconfigured, for instance. By performing authenticated gesture recognition, as described with respect to the example method below, however, the computing device shared between family members in this example may be configured to respond to each user in accordance with his or her own preferences.

While the example above describes how aspects of the disclosure may be relevant to a situation in which a computing device is shared among family members, there are many other potential applications of the technologies described herein. For example, similar situations may arise when a device capable of gesture recognition is shared among doctors, nurses, and other workers at a hospital; staff at a retail outlet or warehouse; employees of a company; and in many other situations. For example, it may be desirable for different users to control a game using respective gestures. In any and/or all of these situations, performing authenticated gesture recognition, as described below, may allow each individual user of a device to customize how the particular device responds to gesture input provided by the individual user.

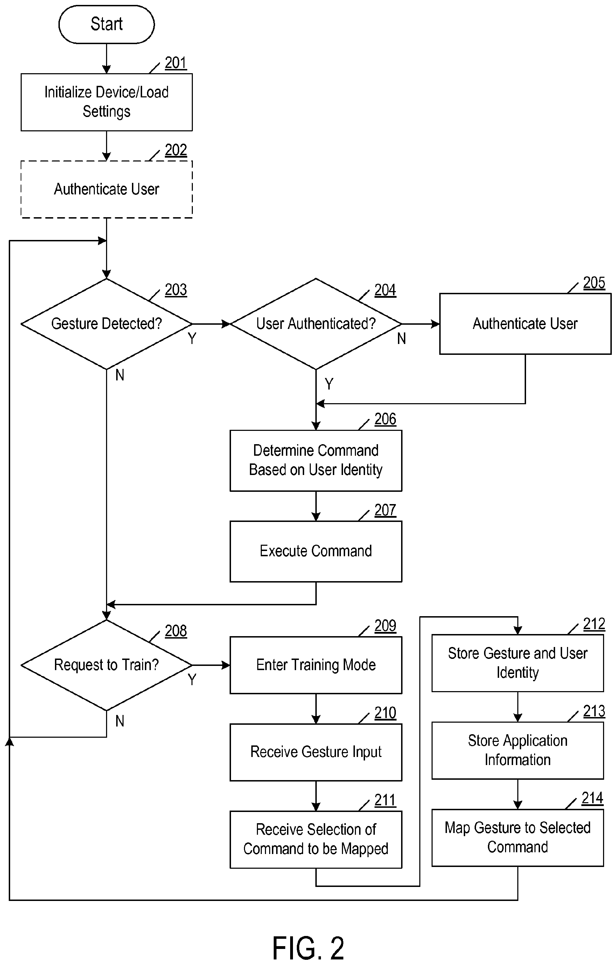

FIG. 2 illustrates an example method of performing authenticated gesture recognition according to one or more illustrative aspects of the disclosure. According to one or more aspects, any and/or all of the methods and/or methods steps described herein may be implemented by and/or in a computing device, such as computing device 100 and/or the computer system described in greater detail below, for instance. In one embodiment, one or more of the method steps described below with respect to FIG. 2 are implemented by a processor of the device 100. Additionally or alternatively, any and/or all of the methods and/or method steps described herein may be implemented in computer-readable instructions, such as computer-readable instructions stored on a computer-readable medium.

In step 201, a computing device, such as a computing device capable of recognizing one or more gestures as user input (e.g., computing device 100), may be initialized, and/or one or more settings may be loaded. For example, when the computing device is first powered on, the device (in association with software stored and/or executed thereon, for instance) may load one or more settings, such as user preferences related to gestures. In at least one arrangement, these user preferences may include gesture mapping information (e.g., a data table that may, in some instances, be referred to as a gesture map) in which particular gestures are stored in association with particular user identifiers and particular commands. As noted above, different users may specify that different commands be performed in response to detection of the same gesture, and this may be reflected in a corresponding gesture map. The following table (labeled "Table A" below) illustrates an example of such a gesture map:

**Table A**

| Gesture | User | Command |
|---|---|---|
| Left Swipe | J_Doe_123 | Next Page |
| Left Swipe | M_Doe_5813 | Back Page |
| Shake | J_Doe_123 | Undo |

While the example table above includes a name for each gesture, in some arrangements, such a table (e.g., a gesture map) may include more detailed information about each gesture instead of or in addition to a name for each gesture. For example, in some arrangements, a gesture map may include information about a plurality of gestures in which each gesture is defined as a pattern of motion and/or other user input received in a particular order by one or more particular sensors. Other information may likewise be included instead of and/or in addition to the information shown in the example gesture map represented by the table above.

For example, in some arrangements, gesture mapping information might not only correlate particular gestures performed by particular users to particular commands, but also may correlate particular gestures performed by particular users *within particular applications* (e.g., software programs) to particular commands. In other words, in some arrangements, different users (or possibly even the same user) may specify that different commands should be executed in response to the same gesture when performed in different applications. For example, a user may specify (and corresponding gesture mapping information may reflect) that a "right shake" gesture correspond to a first command (e.g., an erase command) when performed in a first application (e.g., a word processing application), and that the same "right shake" gesture correspond to a second command (e.g., an accelerate command) when performed in a second application (e.g., a car racing video game). This relationship also may be reflected in a gesture map, such as the example gesture map represented by the table above, which, in such arrangements, may include an additional column in which application names or other identifiers are specified.

In at least one arrangement, gesture mapping information, such as the example gesture map illustrated in the table above, may be programmed and/or created by a user on one device (e.g., the user's smart phone) and transferred to another, separate device (e.g., the user's tablet computer). For example, having set various preferences related to gesture recognition and/or created gesture mapping information on a smart phone, a user may save (and the smart phone and/or software executed thereon may generate) a data file (e.g., an XML file) in which such preferences and/or gesture mapping information may be stored. Subsequently, in this example, the user may send, transmit, and/or otherwise share the data file between the two devices, such that the data file storing the user's gesture recognition preferences and/or gesture mapping information is loaded on the other device.

In at least one additional or alternative arrangement, gesture mapping information, such as the example gesture map illustrated in the table above, may be stored on a server and accessed when a device is determining a meaning of a gesture (e.g., when the device is determining what action or command should be executed in response to detection of the gesture with respect to the particular user that performed the gesture). For example, such gesture mapping information may be stored on an Internet server and/or may be associated with a profile created and/or maintained by and/or for the user, so as to enable the user to share gesture mapping information across different devices, for instance.

In optional step 202, a user may be authenticated. For example, in optional step 202, the computing device may authenticate the user by prompting the user to enter a user identifier and/or a password, as this may allow the device to determine which user, of a plurality of users, is currently using the device. In some arrangements, the computing device may authenticate the user based on input received by the device via one or more sensors. In other words, in one or more arrangements, the computing device may authenticate and/or otherwise identify the user based on sensor input (e.g., data received from one or more sensors, such as the sensors used to detect and/or otherwise recognize gestures, like cameras, microphones, proximity sensors, gyroscopes, accelerometers, pressure sensors, grip sensors, touch screens, etc.) that is captured substantially contemporaneously with the gesture input (e.g., input received from one or more sensors corresponding to a particular gesture). For example, the computing device may identify the user based on the user's fingerprints, as received via one or more sensors that also may be used in recognizing gestures (e.g., a touch screen, camera, and/or a grip sensor). In these arrangements, user authentication thus may happen in parallel with gesture recognition. For example, a user's fingerprint could be read when and/or while the user is swiping a touch screen on the device (e.g., and thereby performing a swipe gesture). In this example, the user's fingerprint could be used by the computing device to identify the user, and the user's fingerprint would be the sensor input that was captured substantially contemporaneously with the gesture input, where the gesture input corresponded to the swiping motion itself. Similarly, a facial recognition function may be executed to identify a particular user in parallel with detecting a gesture comprising a certain facial expression performed by the user.

In another example, sound (e.g., heartbeat, voice, etc.) and/or smell (e.g., an individual's unique scent) could be captured and/or detected by the device substantially contemporaneously with gesture input and could subsequently be used to authenticate the user. For example, the computing device may be equipped with one or more microphones that are configured to capture sounds in the vicinity of the device. In this example arrangement, the device may capture user-associated sounds, such as a user's heartbeat and/or voice, while also receiving gesture input, such that the device may authenticate the user based on the user-associated sounds, and subsequently may execute one or more commands based on the determined/authenticated identity of the user. The device may include a sensor that measures or identifies a heartbeat using another method, for example by measuring electrical signals across a user's skin. In some embodiments, ultrasound may be used to detect a user's gesture. For example, a user may hold a device that emits ultrasound waves, and movement of that device may be detected by a plurality of microphones. Additionally or alternatively, the computing device may be equipped with one or more sensors that are configured to capture smells in the vicinity of the device. In such an example arrangement, the device may capture user-associated smells, such as scents or odors, while also receiving gesture input, such that the device may authenticate the user based on the user-associated smells, and subsequently may execute one or more commands based on the determined/authenticated identity of the user.

In another example, a user could be authenticated via camera input while a gesture performed by the user is detected and/or otherwise received via a proximity sensor. For instance, at the same time that a proximity sensor of the computing device captured and/or otherwise detected a gesture performed by a user (e.g., the user's hand approaching the computing device), the computing device may also receive sensor input from a camera connected to the computing device, where the sensor input received from the camera includes an image of the user that the computing device may use to determine the identity of and/or otherwise authenticate the user. As noted above, the computing device then may determine what command to execute in response to detecting the gesture based on the determined identity of the user, for example. In other arrangements, the computing device might not authenticate the user until after a gesture is recognized (e.g., after a gesture is detected by the device), and thus, in one or more arrangements, authenticating the user in step 202 may be optional.

In step 203, it may be determined whether a gesture has been detected. For example, in step 203, the computing device may determine whether it has received input (e.g., via one or more sensors included the device, such as those described above) that may be recognized as and/or otherwise corresponds to a gesture.

If it is determined, in step 203, that a gesture has been detected, then in step 204, it may be determined whether a user has been authenticated. For example, in step 204, the computing device may determine whether a user has already been authenticated and/or otherwise identified (e.g., in step 202), because, as further described below, the identity of the user who performed the gesture may affect which command is executed by the device in response to detecting the gesture. In some embodiments, the determination of whether a user has been authenticated at step 204 is performed substantially concurrently with the detection of a gesture at step 203, for example when the detected gesture itself or an input received with the gesture is used to authenticate the user. In some embodiments, the determination of whether a user has been authenticated at step 204 is performed prior to detection of a gesture at step 203. In such embodiments, the identity of the user may be used to detect the gesture. For example, the gesture may be detected using a subset of available sensors, as discussed in additional detail below. Further, a gesture detection engine may determine at step 203 whether a gesture has been detected. Operation and/or parameters of the engine may be determined based on a user that has been authenticated. Thus, user authentication may not only determine a mapping of gestures to commands, but may also affect the manner in which gestures are detected. In some embodiments, a gesture detection engine is stored on the device 100, for example in a memory or processor thereof. The engine may comprise instructions or data that can be used to detect a gesture and/or affect operation of an application or function based on a detected gesture. For example, when a user makes a gesture using the device 100, the engine may evaluate the gesture and determine the effect of the gesture on the execution of an application.

If it is determined, in step 204, that the user has not been authenticated, then in step 205, the user may be authenticated. In some arrangements, even if a user was previously authenticated (e.g., in step 202 or in a previous iteration of the gesture recognition loop), it might be determined in step 204 that the user has not been authenticated so that the authentication of step 205 is performed. For example, in step 205, the computing device may authenticate the user similar to how the user may be authenticated in step 202 above (e.g., by displaying a prompt to the user that asks the user to enter a user identifier and/or password; by identifying the user based on input received from one or more sensors, such as by recognizing the user's face, fingerprints, silhouette, and/or other identifiable features and/or characteristics using camera data, touch data, etc.; and/or by other methods).

In at least one arrangement, the authentication of step 205 may be based on sensor data collected along with the detection of the gesture in step 203, such as sensor input that is captured substantially contemporaneously with the detected gesture, as also discussed above. For example, in performing a particular gesture using a touch screen of the device, when the particular gesture was recognized in step 203, the user also may have simultaneously provided touch-based input (e.g., the user's fingerprints) that the device additionally may use to identify the user in step 205. This functionality may, for instance, allow for recognition of gestures that are entered or performed by different users at the same time (e.g., two users who are both interacting with the device while, for instance, playing a video game with each other). In addition, this functionality may allow for authentication of such users in relation to the simultaneously entered gestures (e.g., so as to determine which user entered or performed which gesture).

As used herein, the phrase "substantially contemporaneously" may be used to describe user input that is provided by a user and/or captured by one or more sensors just before, at the same time as, and/or just after a gesture. In many instances, these time frames may vary or otherwise depend on the duration of the gesture. For example, for a simple gesture that is performed over a period of one or two seconds, sensor input that is captured substantially contemporaneously with the gesture input may include sensor input captured during a period of time starting a half-second before the gesture input and ending a half-second after the gesture input. As another example, for a more complex gesture that is performed over a period of four or five seconds, sensor input that is captured substantially contemporaneously with the gesture input may include sensor input captured during a period of time starting one second before the gesture input and ending one second after the gesture input. Those having skill in the art will appreciate that the examples of substantially contemporaneous sensor input described above are merely illustrations of several embodiments among many embodiments. The phrase "substantially contemporaneous" may include time periods in addition to those discussed above, for example, time periods having a duration in excess of the durations enumerated above.

In one or more additional and/or alternative arrangements, the authentication of step 205 may further be based on registration information associated with a linked device that is involved in capturing the gesture and/or the sensor data corresponding to the gesture. For example, in some instances, the computing device performing the example method illustrated in FIG. 2 may be linked (e.g., via a wired or wireless data connection) to one or more other devices, which may be referred to as "linked devices." The linked devices may, for instance, be smartphones, tablet computers, laptop computers, controllers, or other mobile devices. Additionally or alternatively, each linked device may be registered with the computing device as being used by one or more particular users of a plurality of users of the computing device, and the registration information for a particular linked device may indicate which of the plurality of users are registered as using the particular linked device. As an example, in such an arrangement, the computing device may be a set-top box or similar television receiver, and two users, who each possess a smartphone, may have registered their smartphones with the set-top box and may interact with and control the set-top box by performing gestures with, on, or by otherwise using their smartphones. In this example, the set-top box may receive gesture input from the two smartphones and further may authenticate the users (to determine what action should be performed in response to the gesture input) based on registration information indicating which of the two users is controlling or otherwise interacting with each smartphone. In some instances, the smartphones may send raw sensor data corresponding to the gesture input to the set-top box for processing (e.g., such that the set-top box, rather than either of the individual smartphones, would determine which particular gesture or gestures were performed), while in other instances, the smartphones themselves may process the raw sensor data to determine which gesture or gestures were performed and subsequently send an indication of which gesture or gestures were performed to the set-top box to facilitate execution of one or more responsive commands at the set-top box.

In step 206, a command to be executed may be determined based on the identity of the authenticated user. For example, in step 206, the computing device may perform a lookup operation to determine, based on the previously loaded gesture mapping information, whether the detected gesture corresponds to a particular command for the particular user. This may involve, for instance, cross-referencing a gesture map, such as the example gesture map described above. If, for instance, the computing device determined that the detected gesture corresponds to a particular command for the particular user, then the computing device may determine that the particular command is to be executed. In some arrangements, if the computing device determines that the particular user has not specified a particular command to be executed in response to the detected gesture, then the computing device may determine that a default command for the gesture should be executed.

In step 207, the command may be executed. For example, in step 207, the computing device may execute the particular command that was determined to be executed in step 206.

Subsequently, the method may proceed to step 208. Step 208 also may be performed as part of the processing loop illustrated by the example method of FIG. 2 if, in step 203, it is determined that a gesture has not been detected. In step 208, it may be determined whether a request to train gesture recognition functionalities has been received. For example, in step 208, the computing device may determine whether a user has requested to edit gesture recognition settings, such as one or more user preferences that specify gesture mapping information.

If it is determined, in step 208, that a request to train gesture recognition functionalities has been received, then in step 209, a gesture training mode may be entered. For example, in step 209, the computing device may display one or more user interfaces via which a user may enter and/or edit preferences specifying which commands should be executed in response to the detection of particular gestures (e.g., for the particular user and/or for other users). In some arrangements, the computing device also may authenticate and/or otherwise identify the user, as similar to how the user may be authenticated in steps 202 and 205 above. By authenticating the user in step 209, for instance, the device may display and/or allow the user to edit gesture recognition settings for the particular user who actually may be using the device and/or requesting to edit such settings.

Additionally or alternatively, one or more of the user interfaces displayed by the computing device in step 209 may allow the user to edit, for instance, preferences specifying which sensor or sensors should be used in detecting gestures input by the particular user. For example, the user may specify that only input received via a touch screen or camera is to be used in detecting gestures performed by the user (and input received from a grip sensor is to be disregarded, for instance). In another example, the user may specify that input received from all sensors included in the device is to be taken into account when detecting gestures. Many other combinations are possible and may be specified by the user (e.g., via one or more user interfaces) as desired.

In step 210, gesture input may be received. For example, in step 210, the computing device may receive input via one or more sensors that corresponds to a particular gesture. For instance, the user may perform a left swipe gesture, and the device may receive input via an equipped touch screen and an equipped camera capturing the left swipe gesture. Additionally or alternatively, having received such input in this example, the device may process such input (e.g., using one or more gesture recognition algorithms) to determine that the motion captured via these sensors, for instance, corresponds to a left swipe gesture.

In step 211, a selection of a command to be mapped to the gesture (e.g., the gesture corresponding to the received gesture input) may be received. For example, in step 211, the computing device may prompt the user to select a command (e.g., from a list of available commands) that should be executed in response to the gesture performed by the user (e.g., the gesture received as gesture input in step 210). Subsequently, in this example, the computing device may receive the user's selection of a command, via a displayed prompt, for instance, where the command is to be mapped to the gesture (e.g., the gesture corresponding to the received gesture input).

Subsequently, in step 212, the received gesture (e.g., the gesture corresponding to the received gesture input) and the user identity (e.g., the identity of the user authenticated in step 209) may be stored. For example, in step 212, the computing device may update gesture mapping information, such as a data table storing a gesture map, for instance, to store the received gesture in connection with the user identity.

Additionally, in step 213, if the user wishes to map the received gesture to a particular command within a particular application, then the particular application may be specified and/or information related thereto may be stored. For example, in step 213, the computing device may receive user input selecting the received gesture for mapping to the selected command within a particular application, and subsequently, the computing device may update gesture mapping information, such as a data table storing a gesture map, for instance, to store information about the particular application in connection with the received gesture and the user identity.

Thereafter, in step 213, the received gesture may be mapped to the selected command. For example, in mapping the received gesture to the selected command, the computing device may update gesture mapping information, such as a data table storing a gesture map, for instance, to specify that the selected command (e.g., the command selected by the user in step 211) should be executed in response to detecting the particular gesture (e.g., the gesture corresponding to the gesture input received in step 210) when performed by the particular user (e.g., the user authenticated in step 209 at the beginning of the training mode). Additionally or alternatively, if a particular application was specified for the gesture-command mapping and/or information about the particular application was stored (e.g., in step 213), then the computing device may update the gesture mapping information (e.g., the data table storing the gesture map) to specify that the selected command should be executed in response to detecting the particular gesture when performed by the particular user while the particular application is being accessed.

In some arrangements, the method then may end. In other arrangements, however, the method may return to step 203, where it may again be determined whether a gesture has been detected. Subsequently, the method of FIG. 2 may continue in a loop (e.g., as a processing loop, such as a while loop) until the device is powered off, until the user disables gesture recognition functionalities, and/or until the loop is otherwise stopped or broken.

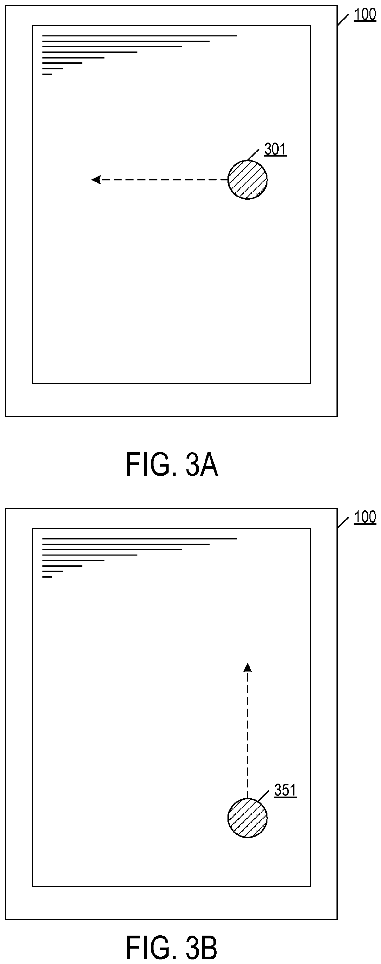

FIG. 3A illustrates an example of how a user may perform a gesture and how a device may detect a gesture according to one or more illustrative aspects of the disclosure. In the example illustrated in FIG. 3A, for instance, a user may perform a left swipe gesture on device 100 by placing their finger at point 301 and then moving their finger left across device 100, which in turn may detect such user input as a gesture via an equipped touch screen. Subsequently, in response to detecting the gesture, device 100 may, for example, perform other steps of the method described above, such as authenticating the user, determining a command to execute in response to the gesture based on the user's identity, and/or executing the command. For instance, in one or more arrangements, device 100 may authenticate (e.g., determine the identity of) the user who performed and/or is performing the gesture using sensor input captured by device 100 substantially contemporaneously with the gesture, such as video data captured by the device's camera(s) at and/or around the same time that the gesture was detected by the device's touch screen. This real-time user authentication then may be used by device 100 in determining which command, if any, should be executed in response to detection of the gesture, as described above.

As another example, in some arrangements, device 100 may include a touchscreen and a microphone, but might not include a camera. In these arrangements, device 100 may authenticate (e.g., determine the identity of) the user who performed and/or is performing a gesture using audio data captured by the device's microphone(s) at and/or around the same time that the gesture was detected by the device's touch screen. Such audio data may include the user's heartbeat and/or voice, and device 100 may be configured to analyze these types of audio data and identify users based on such data. For instance, two users may be playing a video game using device 100, and just prior to performing a gesture corresponding to a particular move within the video game, a user may speak a phrase (e.g., "My Move"), such that device 100 may capture the phrase substantially contemporaneously with the gesture so as to authenticate the user performing the gesture and carry out the move intended by the user.

In some embodiments, the device 100 may be configured to recognize the grip of certain users based on input from pressure sensors disposed on the device. Thus, the device 100 may be able to detect a gesture performed on a touch screen substantially contemporaneously with identifying the user based on how the user is holding the device 100.

FIG. 3B illustrates another example of how a user may perform a gesture and how a device may detect a gesture according to one or more illustrative aspects of the disclosure. In the example illustrated in FIG. 3B, for instance, a user may perform an upward wave gesture on device 100 by placing their hand in front of device 100 at point 351 and then moving their hand upward along device 100, which in turn may detect such user input as a gesture via an equipped camera. Subsequently, in response to detecting the gesture, device 100 may again perform one or more steps of the example method described above to authenticate the user and determine a command to execute in response to the gesture based on the user's identity, for instance. For example, in addition to detecting the gesture using the equipped camera, device 100 may also determine the identity of the user performing the gesture based on image and/or video data received from the camera at the same time that the gesture itself was detected.

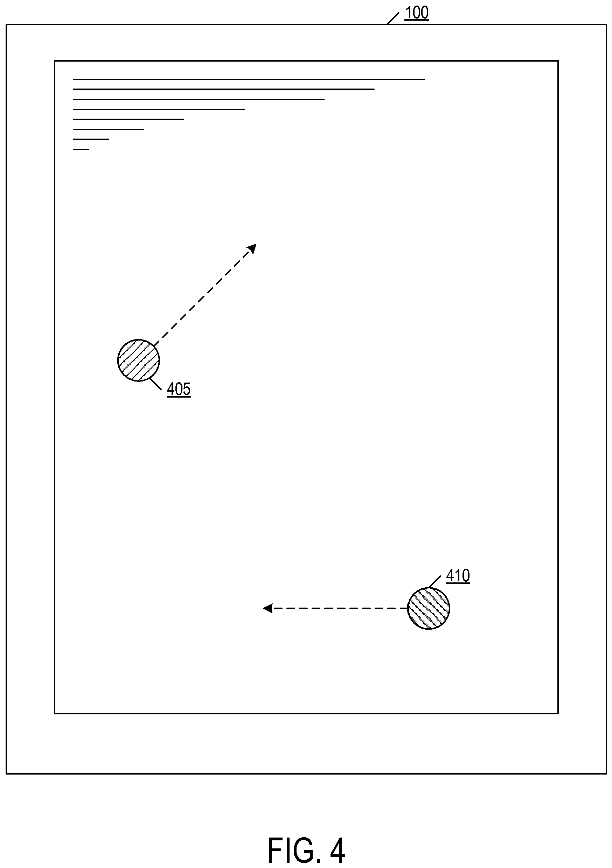

FIG. 4 illustrates an example of how multiple users may perform gestures and how a device may detect the gestures and identify the users according to one or more illustrative aspects of the disclosure. In the example illustrated in FIG. 4, for instance, two users may perform two different gestures at the same time on device 100. In particular, a first user may perform a diagonal swipe gesture on the touch screen of device 100, as represented by point 405, and a second user may simultaneously perform a horizontal slide gesture on the touch screen of device 100, as represented by point 410. Computing device 100 may, for example, be executing a video game application, and the two users may intend for each of their gestures to control their in-game characters or avatars in different ways. To determine how the gestures should be interpreted, device 100 thus may authenticate and/or otherwise determine the identity of the two users in real-time, based on sensor input captured substantially contemporaneously with the detected gestures (e.g., the diagonal swipe gesture and the horizontal slide gesture). As discussed above, this sensor input may include data received from one or more sensors, such as one or more cameras, microphones, proximity sensors, gyroscopes, accelerometers, pressure sensors, grip sensors, touch screens, etc. Thus, in this example, device 100 may determine the identities of the users performing the two gestures by analyzing camera data captured at the same time as the gestures (e.g., to determine, based on the camera data, which user performed which gesture), by analyzing fingerprint data captured by the touch screen at the same as the gestures (e.g., to determine, based on the fingerprint data, which user performed which gesture), by analyzing audio data captured by the microphone at the same time as the gestures (e.g., to determine, based on the audio data, which may include a particular user's voice or heartbeat, which user performed which gesture), and/or by analyzing other sensor data captured and/or otherwise received by device 100. Once device 100 identifies the two users based on this sensor data, device 100 may determine which command(s) should be executed in response to the gestures, and subsequently may execute these command(s). In this manner, a plurality of users may perform gestures and/or otherwise interact with a single computing device at the same time, and the device may continuously authenticate the users in real-time as gestures are performed, so as to recognize gestures and perform the appropriate commands even as different users (with different gesture preferences) interact with the device simultaneously.

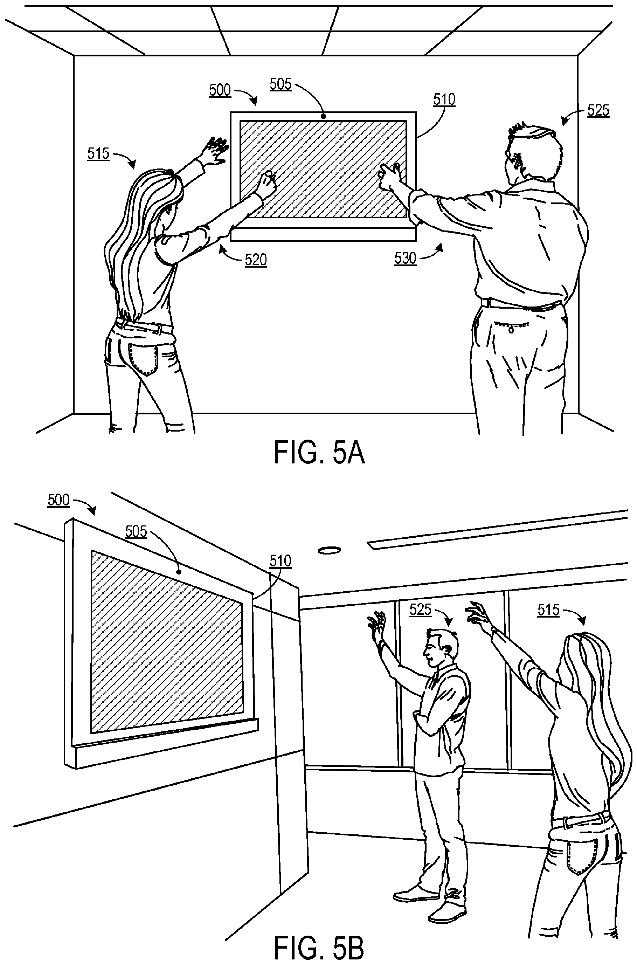

FIGS. 5A and 5B illustrate another example of how multiple users may perform gestures and how a device may detect the gestures and identify the users according to one or more illustrative aspects of the disclosure. In the example illustrated in FIG. 5A, for instance, two users may perform two different gestures at the same time, and system 500 may detect and interpret the gestures in accordance with various aspects of the disclosure.

In some embodiments, system 500 may include various features similar to those discussed above with respect to device 100. For example, system 500 may include a camera 505 and a display screen 510. In the example illustrated in FIG. 5A, system 500 may function as a "smart television" that is configured to receive and display content from various sources (e.g., broadcast television signals, one or more networked computers and/or storage devices, the Internet, etc.). Additionally or alternatively, system 500 may be configured to detect and respond to various gestures performed by different users of system 500.

For instance, a first user 515 of system 500 may perform a first gesture for detection by system 500 by placing his or her arms 520 in a particular position and/or by moving his or her arms 520 in a particular manner. At substantially the same time, a second user 525 of system 500 may perform a second gesture for detection by system 500 by placing his or her arms 530 in a particular position and/or by moving his or her arms 530 in a particular manner. As illustrated in FIG. 5A, the first gesture performed by the first user 515 may be different from the second gesture performed by the second user 525. For instance, the arm, hand, and/or finger positions, and/or the movements of the first user 515 may be different from the arm, hand, and/or finger positions, and/or the movements of the second user 525. Additionally or alternatively, the users' gestures may be interpreted as corresponding to different commands. For example, system 500 may be displaying and/or otherwise providing a video game on display screen 510, and the users may interact with and/or otherwise control the video game by performing gestures on system 500. Those having skill in the art will appreciate that the first gesture need not be different from the second gesture. Further, the users' gestures need not be interpreted as corresponding to different commands. The commands which correspond to the first gesture and the second gesture, however, may be determined based on the identity of the first user 515 and the second user 525, respectively.

FIG. 5B illustrates another view of the users in the example scene depicted in FIG. 5A. As seen in FIG. 5B, the arms of the first user 515 may be in a different position than the arms of the second user 525. Depending on how system 500 is configured, the first gesture performed by the first user 515 and the second gesture performed by the second user 525 may be interpreted by system 500 as corresponding to the same command or different commands.

Referring again to FIG. 5A, in the illustrated example, as the users are performing gestures, system 500 may capture a sequence of images of the users (e.g., using camera 505) and may analyze the sequence of images to recognize the gestures being performed and determine the identities of the users performing the gestures. For example, in analyzing the sequence of images captured with camera 505, system 500 may detect the first gesture and the second gesture in the captured images. Subsequently, system 500 may determine which user is performing which gesture. For instance, system 500 may use facial recognition techniques, body recognition techniques, fingerprint recognition techniques, and/or other methods to identify the users performing the detected gestures. As a result of this processing, system 500 may determine that the first gesture is being performed by, or was performed by, the first user 515. In addition, system 500 may determine that the second gesture is being performed by, or was performed by, the second user 525.

Subsequently, in this example, system 500 may perform various actions in response to each of the detected gestures. For instance, where the users are interacting with a video game being provided by system 500, system 500 may interpret the detected gestures as various commands to be executed in the video game. This may include, for instance, controlling the users' avatars within the video game based on the gesture(s) performed by each user. As discussed above, by authenticating the users based on sensor input captured substantially contemporaneously with the detected gestures (e.g., camera input captured via camera 505), various embodiments can dynamically respond in different ways to similar gesture input provided by different users, thereby enhancing the customizability, convenience, and ease-of-use of a gesture recognition system.

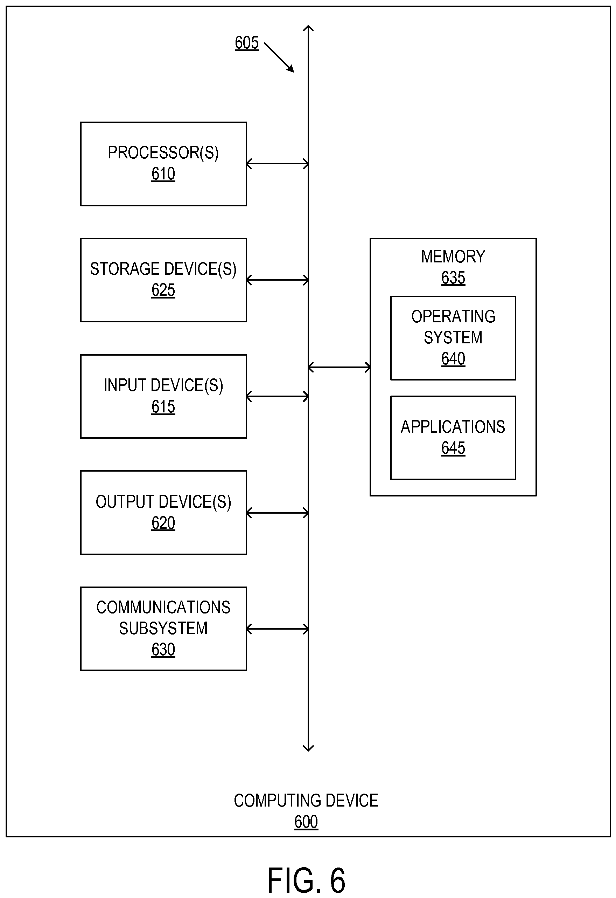

Having described multiple aspects of authenticated gesture recognition, an example of a computing system in which various aspects of the disclosure may be implemented will now be described with respect to FIG. 6. According to one or more aspects, a computer system as illustrated in FIG. 6 may be incorporated as part of a computing device, which may implement, perform, and/or execute any and/or all of the features, methods, and/or method steps described herein. For example, computer system 600 may represent some of the components of a hand-held device. A hand-held device may be any computing device with an input sensory unit, such as a camera and/or a display unit. Examples of a hand-held device include but are not limited to video game consoles, tablets, smart phones, and mobile devices. In one embodiment, the system 600 is configured to implement the device 100 described above. FIG. 6 provides a schematic illustration of one embodiment of a computer system 600 that can perform the methods provided by various other embodiments, as described herein, and/or can function as the host computer system, a remote kiosk/terminal, a point-of-sale device, a mobile device, a set-top box, and/or a computer system. FIG. 6 is meant only to provide a generalized illustration of various components, any and/or all of which may be utilized as appropriate. FIG. 6, therefore, broadly illustrates how individual system elements may be implemented in a relatively separated or relatively more integrated manner.

The computer system 600 is shown comprising hardware elements that can be electrically coupled via a bus 605 (or may otherwise be in communication, as appropriate). The hardware elements may include one or more processors 610, including without limitation one or more general-purpose processors and/or one or more special-purpose processors (such as digital signal processing chips, graphics acceleration processors, and/or the like); one or more input devices 615, which can include without limitation a camera, a mouse, a keyboard and/or the like; and one or more output devices 620, which can include without limitation a display unit, a printer and/or the like. Any of the sensors described above as being used to identify a user or detect a gesture of a user may be implemented in the input devices 615.

The computer system 600 may further include (and/or be in communication with) one or more non-transitory storage devices 625, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data storage, including without limitation, various file systems, database structures, and/or the like.

The computer system 600 might also include a communications subsystem 630, which can include without limitation a modem, a network card (wireless or wired), an infrared communication device, a wireless communication device and/or chipset (such as a Bluetooth® device, an 802.11 device, a WiFi device, a WiMax device, cellular communication facilities, etc.), and/or the like. The communications subsystem 630 may permit data to be exchanged with a network (such as the network described below, to name one example), other computer systems, and/or any other devices described herein. The communications subsystem 630 may include a transmitter and/or a receiver configured to transmit or receive, respectively, gesture mapping data. In many embodiments, the computer system 600 will further comprise a non-transitory working memory 635, which can include a RAM or ROM device, as described above.

The computer system 600 also can comprise software elements, shown as being currently located within the working memory 635, including an operating system 640, device drivers, executable libraries, and/or other code, such as one or more application programs 645, which may comprise computer programs provided by various embodiments, and/or may be designed to implement methods, and/or configure systems, provided by other embodiments, as described herein. Various examples of application programs and functionality are described throughout the specification above. Merely by way of example, one or more procedures described with respect to the method(s) discussed above, for example as described with respect to FIG. 2, might be implemented as code and/or instructions executable by a computer (and/or a processor within a computer); in an aspect, then, such code and/or instructions can be used to configure and/or adapt a general purpose computer (or other device) to perform one or more operations in accordance with the described methods. The processor 610, memory 635, operating system 640, and/or application programs 645 may comprise a gesture detection engine, as discussed above.

A set of these instructions and/or code might be stored on a computer-readable storage medium, such as the storage device(s) 625 described above. In some cases, the storage medium might be incorporated within a computer system, such as computer system 600. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the computer system 600 and/or might take the form of source and/or installable code, which, upon compilation and/or installation on the computer system 600 (e.g., using any of a variety of generally available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

Some embodiments may employ a computer system (such as the computer system 600) to perform methods in accordance with the disclosure. For example, some or all of the procedures of the described methods may be performed by the computer system 600 in response to processor 610 executing one or more sequences of one or more instructions (which might be incorporated into the operating system 640 and/or other code, such as an application program 645) contained in the working memory 635. Such instructions may be read into the working memory 635 from another computer-readable medium, such as one or more of the storage device(s) 625. Merely by way of example, execution of the sequences of instructions contained in the working memory 635 might cause the processor(s) 610 to perform one or more procedures of the methods described herein, for example a method described with respect to FIG. 2.

The terms "machine-readable medium" and "computer-readable medium," as used herein, refer to any medium that participates in providing data that causes a machine to operate in a specific fashion. In an embodiment implemented using the computer system 600, various computer-readable media might be involved in providing instructions/code to processor(s) 610 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 625. Volatile media include, without limitation, dynamic memory, such as the working memory 635. Transmission media include, without limitation, coaxial cables, copper wire and fiber optics, including the wires that comprise the bus 605, as well as the various components of the communications subsystem 630 (and/or the media by which the communications subsystem 630 provides communication with other devices). Hence, transmission media can also take the form of waves (including without limitation radio, acoustic and/or light waves, such as those generated during radio-wave and infrared data communications).

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of computer-readable media may be involved in carrying one or more sequences of one or more instructions to the processor(s) 610 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 600. These signals, which might be in the form of electromagnetic signals, acoustic signals, optical signals and/or the like, are all examples of carrier waves on which instructions can be encoded, in accordance with various embodiments of the invention.

The communications subsystem 630 (and/or components thereof) generally will receive the signals, and the bus 605 then might carry the signals (and/or the data, instructions, etc. carried by the signals) to the working memory 635, from which the processor(s) 610 retrieves and executes the instructions. The instructions received by the working memory 635 may optionally be stored on a non-transitory storage device 625 either before or after execution by the processor(s) 610.

The methods, systems, and devices discussed above are examples. Various embodiments may omit, substitute, or add various procedures or components as appropriate. For instance, in alternative configurations, the methods described may be performed in an order different from that described, and/or various stages may be added, omitted, and/or combined. For example, instead of first receiving a gesture input at 210 in FIG. 2 and thereafter receiving a selection of a command at 211, the device 100 may first identify a command or operation and then prompt a user of the device 100 for a gesture or other input to associate with that command. Also, features described with respect to certain embodiments may be combined in various other embodiments. Different aspects and elements of the embodiments may be combined in a similar manner. Also, technology evolves and, thus, many of the elements are examples that do not limit the scope of the disclosure to those specific examples.

Specific details are given in the description to provide a thorough understanding of the embodiments. However, embodiments may be practiced without these specific details. For example, well-known circuits, processes, algorithms, structures, and techniques have been shown without unnecessary detail in order to avoid obscuring the embodiments. This description provides example embodiments only, and is not intended to limit the scope, applicability, or configuration of the invention.

Also, some embodiments were described as processes depicted as flow diagrams or block diagrams. Although each may describe the operations as a sequential process, many of the operations can be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

## Claims

1. A method, comprising:
detecting (203) a first gesture performed by a first user (515);
determining (205) an identity of the first user (515) based on sensor input captured substantially contemporaneously with the first gesture;
determining, based on the identity of the first user (515), that the first gesture corresponds to at least one command of a plurality of commands; and
executing the at least one command **characterized in that** the first gesture corresponds to a first command when performed by the first user (515), and
wherein the first gesture corresponds to a second command different from the first command when performed by a second user (525) different from the first user (515).

2. The method of claim 1, further comprising:
prior to detecting the first gesture:
authenticating (202) the identity of the first user (515);
receiving first user input corresponding to the first gesture;
receiving second user input corresponding to the at least one command; and
associating the first gesture and the identity of the first user (515) with the at least one command.

3. The method of claim 1, further comprising:
prior to detecting the first gesture, identifying, based on the identity of the first user, one or more particular sensors of a plurality of sensors to use to detect gestures of the first user.

4. The method of claim 3, further comprising receiving from the first user (515) an input specifying the one or more particular sensors.

5. The method of any previous claim, wherein determining that the first gesture corresponds to at least one command is further based on an application being executed.

6. The method of claim 5,
wherein the first gesture corresponds to a first command if a first application is being executed,
wherein the first gesture corresponds to a second command if a second application is being executed, and
wherein the second command is different from the first command and the second application is different from the first application.

7. The method of any previous claim, wherein determining that the first gesture corresponds to at least one command is further based on gesture mapping data received from a separate device.

8. The method of any previous claim, wherein determining that the first gesture corresponds to at least one command comprises determining that the first gesture corresponds to the at least one command with a detection engine configured for use with the first user (515).

9. The method of any previous claim, wherein the at least one command is associated with a healthcare function.

10. The method of any previous claim,
wherein the substantially contemporaneously captured sensor input is captured by a first set of one or more sensors, and
wherein the first gesture is detected by a second set of one or more sensors different from the first set.

11. The method of claim 10,
wherein the first set of one or more sensors includes at least one camera, and
wherein the second set of one or more sensors includes at least one touchscreen.

12. The method of any previous claim, wherein the identity of the first user is further determined based on registration information associated with at least one linked device.

13. The method of any previous claim, further comprising:
detecting a second gesture performed by a second user (525), the second gesture being performed at substantially the same time as the first gesture;
determining an identity of the second user (525) based on the sensor input;
determining, based on the identity of the second user (525), that the second gesture corresponds to a second command of the plurality of commands; and
executing the second command.

14. At least one non-transitory computer-readable medium having computer- executable instructions stored thereon that, when executed, cause at least one computing device to: implement the method according to any of claims 1 to 13.

15. A system, comprising:
means for detecting a gesture performed by a user;
means for determining an identity of the user based on sensor input captured substantially contemporaneously with the detected gesture;
means for determining, based on the identity of the user, that the detected gesture corresponds to at least one command of a plurality of commands; and
means for executing the at least one command **characterized in that** the gesture corresponds to a first command when performed by a first user (515), and
wherein the gesture corresponds to a second command different from the first command when performed by a second user (525) different from the first user.

## Patentansprüche

1. Ein Verfahren, das Folgendes aufweist:
Detektieren (203) einer ersten Geste, die durch einen ersten Nutzer (515) durchgeführt wird;
Bestimmen (205) einer Identität des ersten Nutzers (515) basierend auf einer Sensoreingabe, die im Wesentlichen gleichzeitig mit der ersten Geste erfasst wird;
Bestimmen, basierend auf der Identität des ersten Nutzers (515), dass die erste Geste wenigstens einem Befehl einer Vielzahl von Befehlen entspricht; und
Ausführen des wenigstens einen Befehls
**dadurch gekennzeichnet, dass**
die erste Geste einem ersten Befehl entspricht, wenn sie durch den ersten Nutzer (515) durchgeführt wird, und
wobei die erste Geste einem zweiten Befehl entspricht, der sich von dem ersten Befehl unterscheidet, wenn sie durch einen zweiten Nutzer (525) durchgeführt wird, der sich von dem ersten Nutzer (515) unterscheidet.

2. Verfahren nach Anspruch 1, das weiter Folgendes aufweist:
vor dem Detektieren der ersten Geste:
Authentifizieren (202) der Identität des ersten Nutzers (515);
Empfangen einer ersten Nutzereingabe, die der ersten Geste entspricht;
Empfangen einer zweiten Nutzereingabe, die dem wenigstens einen Befehl entspricht; und
Assoziieren der ersten Geste und der Identität des ersten Nutzers (515) mit dem wenigstens einen Befehl.

3. Verfahren nach Anspruch 1, das weiter Folgendes aufweist:
vor dem Detektieren der ersten Geste, Identifizieren, basierend auf der Identität des ersten Nutzers, eines oder mehrerer bestimmter Sensoren einer Vielzahl von Sensoren zur Verwendung beim Detektieren von Gesten des ersten Nutzers.

4. Verfahren nach Anspruch 3, das weiter Empfangen, von dem ersten Nutzer (515), einer Eingabe aufweist, die den einen oder die mehreren bestimmten Sensoren spezifiziert.

5. Verfahren nach einem vorhergehenden Anspruch, wobei das Bestimmen, dass die erste Geste dem wenigstens einen Befehl entspricht, weiter auf einer Anwendung, die ausgeführt wird, basiert.

6. Verfahren nach Anspruch 5,
wobei die erste Geste einem ersten Befehl entspricht, wenn eine erste Anwendung ausgeführt wird,
wobei die erste Geste einem zweiten Befehl entspricht, wenn eine zweite Anwendung ausgeführt wird, und
wobei sich der zweite Befehl von dem ersten Befehl unterscheidet und sich die zweite Anwendung von der ersten Anwendung unterscheidet.

7. Verfahren nach einem vorhergehenden Anspruch, wobei das Bestimmen, dass die erste Geste wenigstens einem Befehl entspricht, weiter auf Gestenabbildungs- bzw. -zuordnungsdaten basiert, die von einer separaten Einrichtung empfangen werden.

8. Verfahren nach einem vorhergehenden Anspruch, wobei das Bestimmen, dass die erste Geste wenigstens einem Befehl entspricht, Bestimmen aufweist, dass die erste Geste dem wenigstens einen Befehl entspricht und zwar mit einer Detektions-Engine, die konfiguriert ist zur Verwendung mit dem ersten Nutzer (515).

9. Verfahren nach einem vorhergehenden Anspruch, wobei der wenigstens eine Befehl mit einer Healthcare- bzw. Gesundheitspflegefunktion assoziiert ist.

10. Verfahren nach einem vorhergehenden Anspruch,
wobei die im Wesentlichen gleichzeitig erfasste Sensoreingabe durch einen ersten Satz von einem oder mehreren Sensoren erfasst wird, und
wobei die erste Geste durch einen zweiten Satz von einem oder mehreren Sensoren detektiert wird, der sich von dem ersten Satz unterscheidet.

11. Verfahren nach Anspruch 10,
wobei der erste Satz von einem oder mehreren Sensoren wenigstens eine Kamera beinhaltet, und
wobei der zweite Satz von einem oder mehreren Sensoren wenigstens einen Touch-Screen bzw. berührungsempfindlichen Bildschirm beinhaltet.

12. Verfahren nach einem vorhergehenden Anspruch, wobei die Identität des ersten Nutzers weiter basierend auf Registrierungsinformation bestimmt wird, die mit wenigstens einer verbundenen Einrichtung assoziiert ist.

13. Verfahren nach einem vorhergehenden Anspruch, das weiter Folgendes aufweist:
Detektieren einer zweiten Geste, die durch einen zweiten Nutzer (525) durchgeführt wird, wobei die zweite Geste im Wesentlichen zur gleichen Zeit durchgeführt wird wie die erste Geste;
Bestimmen einer Identität des zweiten Nutzers (525) basierend auf der Sensoreingabe;
Bestimmen, basierend auf der Identität des zweiten Nutzers (525), dass die zweite Geste einem zweiten Befehl der Vielzahl von Befehlen entspricht; und
Ausführen des zweiten Befehls.

14. Wenigstens ein nicht transitorisches computerlesbares Medium mit darauf gespeicherten von einem Computer ausführbaren Instruktionen, die, wenn sie ausgeführt werden, wenigstens eine Rechnereinrichtung veranlassen zum: Implementieren des Verfahrens gemäß einem der Ansprüche 1 bis 13.

15. Ein System, das Folgendes aufweist:
Mittel zum Detektieren einer Geste, die durch einen Nutzer durchgeführt wird;
Mittel zum Bestimmen einer Identität des Nutzers basierend auf einer Sensoreingabe, die im Wesentlichen gleichzeitig mit der detektierten Geste erfasst wird;
Mittel zum Bestimmen, basierend auf der Identität des Nutzers, dass die detektierte Geste wenigstens einem Befehl einer Vielzahl von Befehlen entspricht; und
Mittel zum Ausführen des wenigstens einen Befehls,
**dadurch gekennzeichnet, dass**
die Geste einem ersten Befehl entspricht, wenn sie durch einen ersten Nutzer (515) durchgeführt wird, und
wobei die Geste einem zweiten Befehl entspricht, der sich von dem ersten Befehl unterscheidet, wenn sie durch einen zweiten Nutzer (525) durchgeführt wird, der sich von dem ersten Nutzer unterscheidet.

## Revendications

1. Procédé comprenant les étapes consistant à :
détecter (203) un premier geste effectué par un premier utilisateur (515) ;
déterminer (205) une identité du premier utilisateur (515) sur la base d'une entrée de capteur capturée sensiblement simultanément avec le premier geste ;
déterminer, sur la base de l'identité du premier utilisateur (515), que le premier geste correspond à au moins une commande parmi une pluralité de commandes ; et
exécuter la au moins une commande,
caractériser en ce que
le premier geste correspond à une première commande lorsqu'il est exécuté par le premier utilisateur (515), et dans lequel le premier geste correspond à une deuxième commande différente de la première commande lorsqu'il est effectué par un deuxième utilisateur (525) différent du premier utilisateur (515).

2. Procédé selon la revendication 1, comprenant en outre les étapes consistant à :
avant de détecter le premier geste:
authentifier (202) l'identité du premier utilisateur (515) ;
recevoir une première entrée d'utilisateur correspondant au premier geste ;
recevoir une deuxième entrée d'utilisateur correspondant à la au moins une commande ; et
associer le premier geste et l'identité du premier utilisateur (515) à la au moins une commande.

3. Procédé selon la revendication 1, comprenant en outre:
avant la détection du premier geste, l'étape consistant à identifier, sur la base de l'identité du premier utilisateur, un ou plusieurs capteurs particuliers parmi une pluralité de capteurs à utiliser pour détecter les gestes du premier utilisateur.

4. Procédé selon la revendication 3, comprenant en outre l'étapes consistant à recevoir, à partir du premier utilisateur (515) une entrée spécifiant l'un ou les plusieurs capteurs particuliers.

5. Procédé selon l'une quelconque des revendications précédentes, dans lequel l'étape consistant à déterminer que le premier geste correspond à au moins une commande est en outre basée sur une application en cours d'exécution.

6. Procédé selon la revendication 5,
dans lequel le premier geste correspond à une première commande si une première application est en cours d'exécution,
dans lequel le premier geste correspond à une deuxième commande si une deuxième application est en cours d'exécution, et
dans lequel la deuxième commande est différente de la première commande et la deuxième application est différente de la première application.

7. Procédé selon l'une quelconque des revendications précédentes, dans lequel l'étape consistant à déterminer que le premier geste correspond à au moins une commande est en outre basée sur des données de mappage de gestes reçues d'un dispositif séparé.

8. Procédé selon l'une quelconque des revendications précédentes, dans lequel l'étape consistant à déterminer que le premier geste correspond à au moins une commande comprend la détermination que le premier geste correspond à la au moins une commande avec un moteur de détection configuré pour être utilisé avec le premier utilisateur (515).

9. Procédé l'une quelconque des revendications précédentes, dans lequel la au moins une commande est associée à une fonction dans le domaine de la santé.

10. Procédé selon l'une quelconque des revendications précédentes,
dans lequel l'entrée de capteur qui a été capturée sensiblement simultanément est capturée par un premier ensemble d'un ou de plusieurs capteurs, et
dans lequel le premier geste est détecté par un deuxième ensemble d'un ou plusieurs capteurs différents du premier ensemble.

11. Le procédé de la revendication 10,
dans lequel le premier ensemble d'un ou de plusieurs capteurs comprend au moins une caméra, et
dans lequel le deuxième ensemble d'un ou de plusieurs capteurs comprend au moins un écran tactile.

12. Procédé selon l'une quelconque des revendications précédentes, dans lequel l'identité du premier utilisateur est en outre déterminée sur la base des informations d'enregistrement associées à au moins un dispositif lié.

13. Procédé selon l'une quelconque des revendications précédentes, comprenant en outre les étapes consistant à :
détecter un deuxième geste effectué par un deuxième utilisateur (525), le deuxième geste étant effectué sensiblement en même temps que le premier geste ;
déterminer une identité du deuxième utilisateur (525) sur la base de l'entrée de capteur ;
déterminer, sur la base de l'identité du deuxième utilisateur (525) que le deuxième geste correspond à une deuxième commande de la pluralité de commandes ; et
exécuter la deuxième commande.

14. Au moins un support non transitoire lisible par ordinateur portant des instructions lisibles par ordinateur stockées sur celui-ci qui, lors de leur exécution, amènent au moins un dispositif informatique à : mettre en oeuvre le procédé selon l'une quelconque des revendications 1 à 13.

15. Un système comprenant :
des moyens pour détecter un geste effectué par un utilisateur ;
des moyens pour déterminer une identité de l'utilisateur sur la base d'une entrée de capteur capturée sensiblement simultanément avec le geste détecté ;
des moyens pour déterminer, sur la base de l'identité de l'utilisateur, que le geste détecté correspond à au moins une commande parmi une pluralité de commandes ; et
des moyens pour exécuter la au moins une commande,
**caractérisé en ce que**
le geste correspond à une première commande lorsqu'il est exécuté par un premier utilisateur (515), et
dans lequel le geste correspond à une deuxième commande différente de la première commande lorsqu'il est effectué par un deuxième utilisateur (525) différent du premier utilisateur.
